Europäisches Patentamt

European Patent Office

Office européen des brevets

(11) Publication number: **0 149 245 B1**

(12) **EUROPEAN PATENT SPECIFICATION**

(19)

(45) Date of publication of patent specification: **18.03.92**     (51) Int. Cl.⁵: **G11B** **20/18**, G11B 20/10, G11B 20/12, H03M 13/00

(21) Application number: **84116409.8**

(22) Date of filing: **27.12.84**

(54) PCM data recording system.

(30) Priority: **26.12.83 JP 243858/83**
**26.12.83 JP 243859/83**
**11.01.84 JP 1923/84**

(43) Date of publication of application:
**24.07.85 Bulletin  85/30**

(45) Publication of the grant of the patent:
**18.03.92 Bulletin  92/12**

(84) Designated Contracting States:
**DE FR GB**

(56) References cited:
**EP-A- 0 074 841**
**EP-A- 0 085 517**
**GB-A- 2 103 410**
**GB-A- 2 118 351**
**US-A- 4 375 101**

**PATENT ABSTRACTS OF JAPAN, vol. 4, no. 175 (E-36)[657], 3rd December 1980; & JP-A-55 120 273 (MATSUSHITA DENKI SANGYO K.K.) 16-09-1980**

(73) Proprietor: **HITACHI, LTD.**
**6, Kanda Surugadai 4-chome**
**Chiyoda-ku, Tokyo 100(JP)**

(72) Inventor: **Okamoto, Hiroo**
**Hitachi-Fujimiryo, 1545 Yoshidacho**
**Totsuka-ku Yokohama(JP)**
Inventor: **Kobayashi, Masaharu**
**331, Hitachi-Hachimanyama Apartment House 1545**
**Yoshidacho Totsuka-ku Yokohama(JP)**
Inventor: **Noguchi, Takaharu**
**135-go, Totsuka-Hairaizu, 884-1 Kamikuratacho**
**Tatsuka-ku, Yokohama(JP)**
Inventor: **Arai, Takao**
**65-24, Ibukino Midori-ku**
**Yokohama(JP)**

(74) Representative: **Frohwitter, Bernhard, Dipl.-Ing. et al**
**Bardehle-Pagenberg-Dost-Altenburg & Partner Patent- und Rechtsanwälte Galileiplatz 1**
**8000 München 80(DE)**

EP 0 149 245 B1

**PATENT ABSTRACTS OF JAPAN, vol. 8, no. 18 (P-250)[1455], 26th January 1984; & JP-A-58 177 537 (MATSUSHITA DENKI SANGYO K.K.) 18-10-1983**

**IEEE TRANSACTIONS ON CONSUMER ELEC-TRONICS, vol. CE-29, no. 3, August 1983, pages 430-437, IEEE, New York, US; HEITARO NAKAJIMA et al.: "A rotary head high density digital audio tape recorder"**

## Description

The present invention relates to a data recording technique for a PCM data recorder having a rotary head and, particularly, to a method and apparatus for recording PCM data suitable for arranging appended information in a recording medium area without increasing the redundancy of PCM data.

A PCM audio recording and reproducing system, which converts an analog audio signal into PCM digital signals, records the digital signals on a recording medium, and thereafter reproduces the digital signals and converts them back into the analog audio signal, achieves a drastic improvement in the reproduced sound quality as compared with the conventional analog audio recording and reproducing system. However, this system needs the amount of information to be transmitted approximately 50 times as much as the case of the analog audio system, and when the magnetic tape is used as a recording medium, it is necessary to increase the amount of information transmitted in unit time length by increasing the number of tracks or increasing the tape speed against the head as practiced in the rotary head tracking system. Currently known PCM recording and reproducing (recorder) systems fall into the stationary-head digital audio tape (S-DAT) recorder system using multiple tracks, and the rotary-head digital audio tape (R-DAT) recorder system. The R-DAT system has much possibilities for the prevalence of PCM audio recorders among home users from the viewpoints of cost reduction, running economy and versatility of function. One of functions that are practicable for the R-DAT system, but infeasible for the S-DAT system is a fast address search function at a highspeed mode. This function appends a specific address code to each block of PCM data recorded on the tape, so that it is used to indicate the block position among several music programs in normal playback mode and also used to search for a specific block of record in the fast address search mode. In the R-DAT recorder, PCM signals are partitioned in units of a certain number of symbols or word (e.g. one symbol consists of 8 bits), e.g., 12-symbol units, so that each unit of symbols forms a block. A certain number of blocks, e.g., 128 blocks, are recorded on one track of the tape. See, for example, an article by Kotaka "A Rotary Head High Density Digital Audio Tape Recorder" in the Institute of Electronics and Communication Engineers of Japan Electroacoustic Conference Data EA82 - 46.

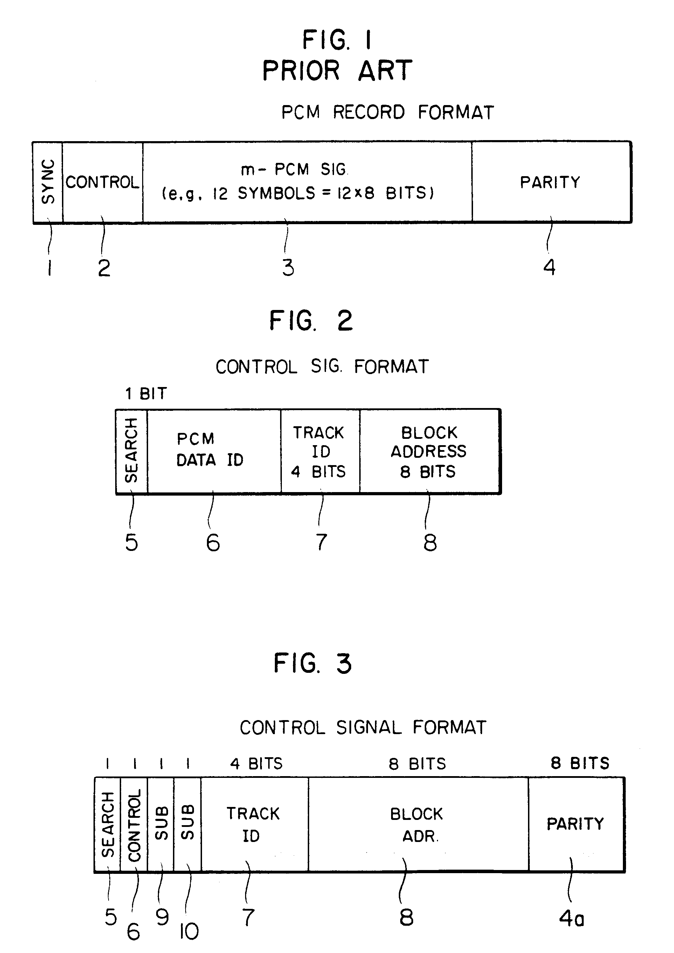

Fig. 1 shows a format of PCM data recording applied to a R-DAT system. The format includes a synchronizing signal 1 providing a reference timing in the playback operation, control signals 2 including information necessary to reproduce the recorded PCM signal, PCM signals 3, and a parity signal 4 for error detection and correction. See, for example, a literature by Iwashita "Activity in DAD conference" in Japanese periodical "Electronics" published by EIAJ, October, 1984.

Fig. 2 shows, as an example, the detailed format of the control signals 2 shown in Fig. 1. In the control signal format, a 1-bit signal 5 separates the head of music programs recorded on the tape, taking two signal levels "0" during a program, and "1" between adjacent programs, and this signal is used to search for a program. PCM signal information 6 includes the sampling frequency, the number of quantization bits, the quantization mode (linear, non-linear, etc.), the analog characteristics (emphasis, noise reduction, etc.), the dubbing inhibit code, the mute signal, and the signal type. Recording of these information in BCD code would need as many as 24 bits. Track identification signal 7 is used to detect the occurrence of track-jump during the playback operation, and it needs as many as 4 bits. Block address 8 is a signal for preventing the interleave-displacement during the playback operation, and it needs at least 7 bits for the case of recording 128 blocks in one track.

As described above, control signals need a total of about 36 bits, that almost amounts of 40% of each PCM signal (12 symbols count 96 bits), resulting in the impairment of redundancy.

A method of recording digital computer data on a magnetic tape corresponding to the preamble of claims 1 and 3 is known from the publication US-A-4 375 101. This publication deals with the recording of digital computer data and teaches the repetition of maindata (three or more times) to increase redundancy and to improve the error detection capability.

Further, a method for subcoding cue-data on compact discs is known from the publication EP-A-0 074 814. This publication discloses that cue-data may be recorded on a tape in a track which is different from the tracks in which information is recorded.

It is an object of the present invention to provide a method of recording data on a magnetic tape and a rotary-head PCM-tape recorder, wherein the redundancy of the digital signals recorded is reduced and control signals appended to said PCM signals may easily be detected, said method and recorder having high error detection capability.

This object is achieved by the inventive methods according to claims 1, 3 and 6 and the inventive PCM-tape recorder according to claim 7.

According to one aspect of the present invention, the data recording method for a PCM tape recorder with a rotary head uses control signals that are dispersed in blocks of data recorded on one or more tracks, so that the control signals are less redundant and yet easily detected. Information needed only for every track is expressed in control signals formed in data bits distributed in several blocks or tracks, whereby the number of bits needed in each block for the control signals can be reduced. Information expressed in bits distributed in several blocks or tracks can be compensated for dropout in reproduction due to scars etc. on the tape by being recorded repeatedly in several locations on the track.

This method enables the recording of information related to PCM signals in less amount of data and also allows easy retrieval of information against a dropout of reproduction signal. By reducing the number of repetition of recording for the control signals, the variety of information can be enriched in exchange.

According to another aspect of the present invention, appended information recorded together with PCM signals on a recording medium such as a magnetic tape includes the maximum value of PCM signals recorded on one track, so that abnormal signals are removed in the playback operation on the basis of comparison of each reproduced PCM signal with the maximum value. Consequently, abnormal data which would be created by miscorrection or track-jump in the playback operation is eliminated, whereby acoustic noises in the PCM audio system can be prevented from occurring.

The present invention will now be described with reference to the attached drawings.

Fig. 1 is a diagram showing the format of a PCM record treated by the rotary-head PCM data recorder;

Fig. 2 is a diagram showing the format of the control signals included in the PCM record;

Fig. 3 is a diagram showing the format of the control signals according to the present invention;

Fig. 4 is a diagram used to explain an embodiment of this invention, showing the layout of data on a track;

Fig. 5 is a diagram showing the layout of control signal data;

Fig. 6 is a diagram showing the format of common information for PCM signals;

Fig. 7 is a block diagram showing the arrangement of the rotary head PCM data recorder;

Fig. 8 its a block diagram showing in detail a part of the arrangement shown in Fig. 7;

Fig. 9 is a diagram showing the format of the control signals according to this invention;

Fig. 10 is a block diagram showing another embodiment of the rotary-head PCM data recorder; and

Fig. 11 is a block diagram showing, as an example, the playback circuit used with the inventive PCM data recording system.

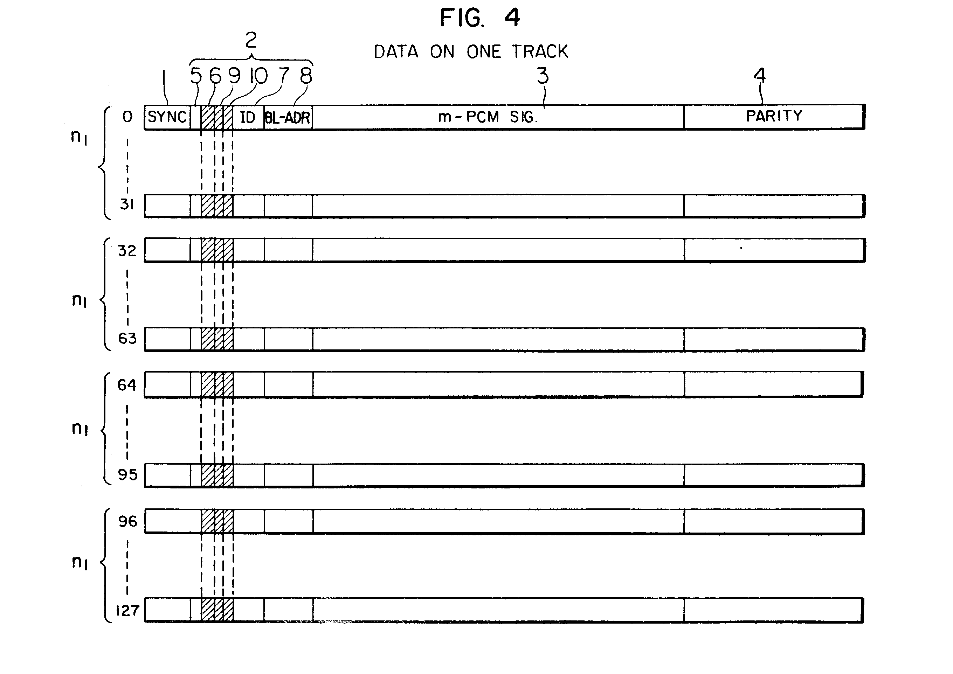

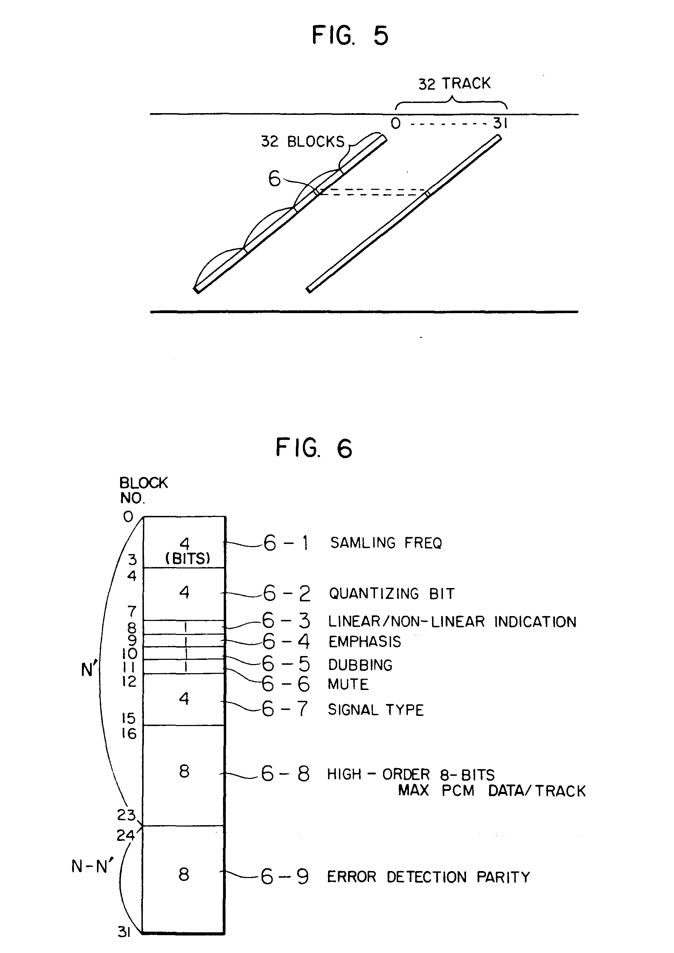

An embodiment of the present invention will be described with reference to Figs. 3 and 4. In Fig. 3, control signals formatted in 24 bits includes a search signal 5, a track identification signal 7, a block address 8, as in the case of Fig. 2 and a parity signal for error detection. The search signal 5 is preferably appended to every block so as to facilitate the search to a program at random. The track identification signal 7 and block address 8 naturally need to be appended to every block. Sections 9 and 10 in the format form a sub-code area which may contain the program time length, title, search items, and the like. PCM signal information 6 suffices the purpose by being appended to every track or every group of tracks, because its contents, called ID code, varies in a long period at least as compared with the unit length of field, i.e., track. On this account, in the case of appending the PCM signal information or PCM data identification signal 6 to every track, it is arranged at the second bit position of control signals 2 of 32 consecutive blocks, i.e., using 32 bits, as shown in Fig. 4. The PCM signal information 6 is recorded in several locations on a track. In this example, the same PCM signal information is recorded in four group locations of blocks 0-31, blocks 32-63, blocks 64-95 and blocks 96-127. In another case, where the PCM signal information 6 is recorded at every group of tracks, it is recorded at the second bit position of control signals in blocks of 32 consecutive tracks, i.e., using 32 bits, as shown in Fig. 5. The same part of the PCM signal information 6 is repeatedly recorded using 128 locations of blocks 0-127.

In Fig. 6, the 32-bit complete PCM signal information 6 includes the items of the sampling frequency 6-1, number of quantization bits 6-2, quantization mode (linear/non-linear) 6-3, emphasis specification 6-4, dubbing inhibit code 6-5, mute signal 6-6, and signal type 6-7. Item 6-8 may be the maximum value of PCM signals. Namely, PCM signals recorded on one track are checked for the absolute value, and high-order 8 bits (excluding the sign bit) of a PCM signal having the maximum absolute value are recorded in this section. During the playback operation, each PCM signal is compared with the maximum value recorded in the section 6-8, and if a signal in excess of the maximum value is detected, it is removed so as to prevent an acoustic noise caused by the abnormal data. This test may be carried out for PCM signals of 2-channel stereo audio signals separately. The last item 6-9 is a parity signal for error detection for the bits of the complete information 6.

Information of items 6-1 through 6-8 may of course be arranged differently. By integrating information of PCM signals of several blocks, the number of bits needed for each block of the PCM signal information 6 can be reduced. Furthermore, by provision of error detection parity data, system malfunctioning caused by erroneous data can be prevented.

As mentioned above, the same PCM signal information 6 is recorded in four locations on one track in the case of the format shown in Fig. 4, or in 128 locations of one track in the case of the format shown in Fig. 5, whereby the information 6 can be retrieved correctly even if part of the reproduced signal drops out due to scars on the tape and the like.

The third and fourth bits referred to by 9 and 10 in Fig. 3 contain other information, and this section may be shared among several blocks so that much information can be recorded.

Track identification signal 7 is used to find out which track includes a specific bit position of PCM signal information shown in Fig. 6. The 4-bit signal 7 can discriminate 16 different tracks. In actual, one of two adjoining tracks can be distinguished based on the azimuth angle of recording head, and therefore, 32 tracks can be discriminated by the 4-bit track identification signal 7.

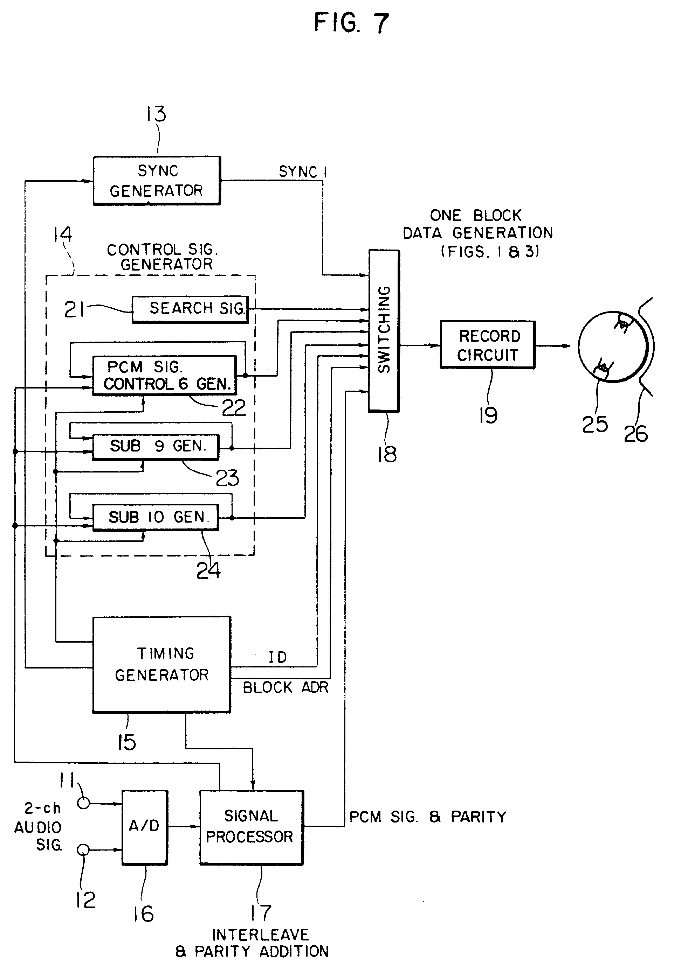

Fig. 7 shows the general circuit arrangement of the rotary-head PCM data recorder by which the control signal according to this invention is recorded. The arrangement includes a synchronizing signal generator 13, a control signal generator 14, a timing generator 15, an A/D converter 16, a signal processor 17, a signal switching circuit 18 and a recording circuit 19.

In operation, 2-channel audio signals entered through input terminals 11 and 12 are converted into PCM digital signals by the A/D converter 16, and the signals are added with the interleaving and parity signals in the signal processor 17.

The control signals are produced by the control signal generator 14, in which a search signal generating circuit 21 produces the search signal 5. A PCM signal information generating circuit 22 is formed of a 32-bit shift register with its output linked to the input so that data is circulated by the shift operation. The shift register 22 is loaded in advance with the 32-bit data shown in Fig. 6 from the signal processing circuit 17. In recording the control signals, the shift register 22 is clocked so that the PCM signal information 6 to be recorded in each block (Fig. 4) or on each track (Fig. 5) is generated. Circuits 23 and 24 generate information to be recorded in sections 9 and 10 in Fig. 3, and they operate similarly to the PCM signal information generating circuit 22.

In the recording operation, the signal switching circuit 18, which is formed of a multiplexer, selects the synchronizing signal 1 produced by the synchronizing signal generator 13, the signal produced by the control signal generator 14, the track identification signal and block address signal produced by the timing generator 15, the PCM signal and parity signal provided by the signal processor 17 sequentially so as to arrange a block of data as shown in Figs. 1 and 3. The block signal is processed into a certain signal form by the recording circuit 19 and recorded on a magnetic tape 26 by a magnetic head 25 mounted on the rotary cylinder.

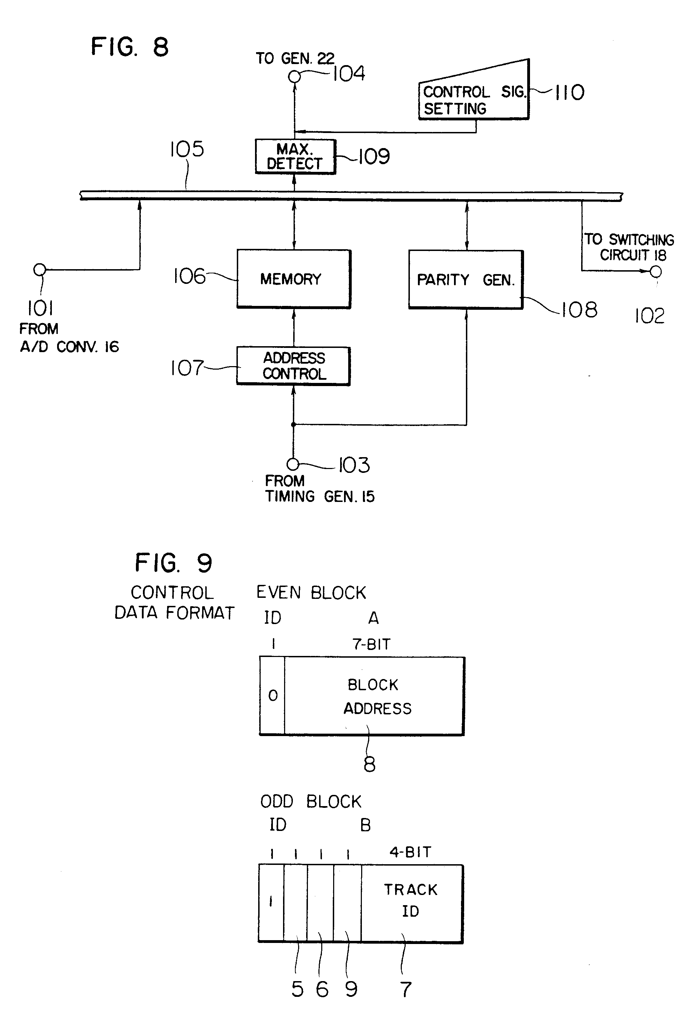

Fig. 8 shows the arrangement of the signal processor 17, which includes a bus line 105, a memory (RAM) 106, a memory address control circuit 107, a parity signal generating circuit 108, and a maximum value detecting circuit 109. Input terminal 101 receives the PCM signal provided by the A/D converter 16, and it is fed through the bus line 105 and stored in the memory 106. The input PCM signal is also fed to the maximum value detecting circuit 109 so that the maximum value among PCM signals recorded on one track is detected. The maximum value detected by the circuit 109 is sent out through the output terminal 104 and loaded to the PCM signal information generator 22.

The PCM signal stored in the memory 106 is read out to the parity signal generating circuit 108, in which a parity signal is generated and it is stored in the parity signal area of the memory 106. In the recording operation, the PCM signals and parity signal are read out of the memory 106 and fed through the output terminal 102 to the signal switching circuit 18. Another terminal 103 receives control signals produced by the timing generator 15 to control the circuit 17. The signal processor 17 further comprises a control data setting circuit 110 such as a keyboard, which generates and sets a control information 6 to the shift register 22.

Fig. 9 shows another format of control signals according to another embodiment of the present invention. The control signals are divided into two 8-bit forms, one being control signals shown by A appended to even-numbered blocks, the other being control signals shown by B appended to odd-numbered blocks. The first bit of each format indicates either even or odd numbered block; "0" for an even-numbered block and "1" for an odd-numbered block. The format A contains the block address in the remaining 7 bit positions (the lowest bit of block address is indicated by the first bit of the format). The format B for odd-numbered blocks contains the search signal 5 in the second bit position, the PCM signal information 6 in the third bit position, other information in the fourth bit position, and the track identification signal 7 in the fifth-eighth bit positions. The PCM signal information 6 and other information 9 are arranged to be shared by 32 blocks as in the case of Fig. 4. Because of 64 odd-numbered blocks containing the information signals 6 and 9 on one track, they are recorded twice on each track. The number of repetition of this information recorded on one track can be determined arbitrarily depending on the number of blocks and the amount of information. For example, in the case of a track made up of 240 blocks, the PCM signal information can be formed in 40 bits and recorded three times on each track.

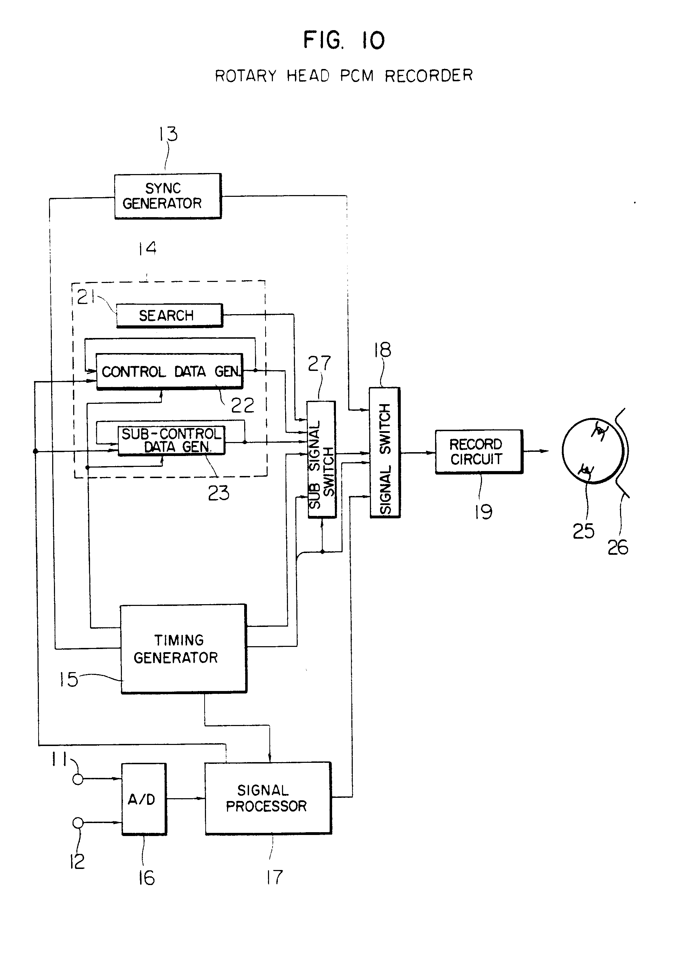

Fig. 10 shows the general circuit arrangement of the rotary-head PCM data recorder adapted to record the signal in the format shown in Fig. 9. In Fig. 10, the identical components to those shown in Fig. 7 are referred to by the like references.

The signal switching circuit 18 receives input control signals in accordance with the lowest bit of the block address provided by the timing generator 15. Namely, a subsidiary signal switching circuit 27 is provided to select all signals except for the lowest bit when the lowest bit of the block address is "0", or selects the outputs of the control signal generator 14 and the track identification signal provided by the timing generator 15 when the lowest bit of the block address is "1". Thus, the control signals are assembled by combining the output from the subsidiary signal switching circuit 27 and the lowest bit of the block address.

Through the arrangement of information, which is not needed at every track, using control signals of several tracks, the bits count of control signals can be reduced. By recording the same section of information in several locations of a track, the dropout of reproduced data due to scars etc. on the tape can be saved.

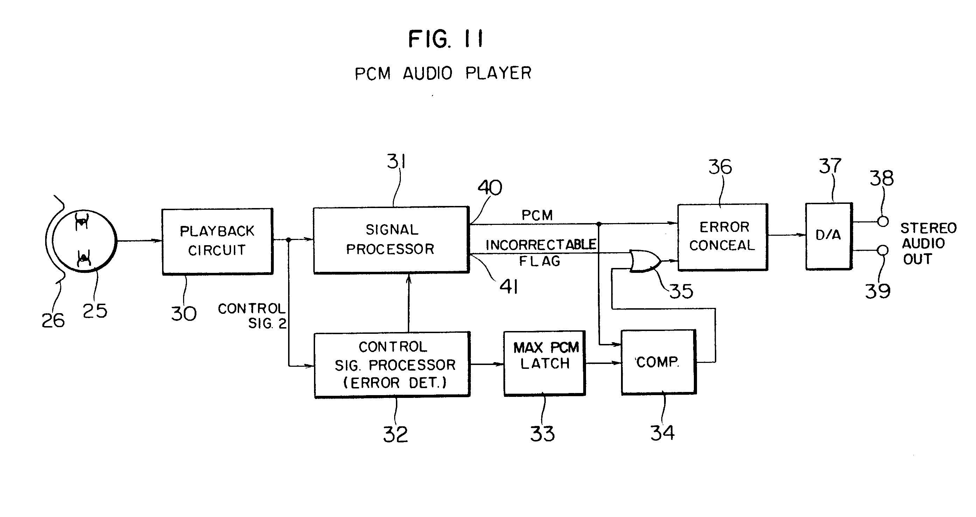

Fig. 11 shows in block diagram a PCM data reproduction system intended to reproduce digital signals recorded on a recording medium by the inventive recording system. The arrangement includes a signal reproducing circuit 30, a signal processing circuit 31, a control signal processing circuit 32, a latch circuit 33, a comparator 34, an error conceal circuit 36 operating in the principle of data holding or interpolation, and a D/A converter 37.

The signal picked up from the magnetic tape 26 by the head 25 is amplified and subjected to synchronizing signal detection by the signal reproducing circuit 30. PCM signals are processed for error detection and correction by the signal processing circuit 31, and correct PCM signals are fed to the following stage through the output terminal 40. If error correction has failed, an incorrectable flag is produced on the output terminal 41, and a further error correcting process such as mean value interpolation is carried out by the error conceal circuit 36.

The control signal 2 is delivered to the control signal processing circuit 32, in which error detection takes place using the parity signal 6-9, then the cleared control signals 6-1 through 6-7 are fed to the signal processing circuit 31. The maximum value 6-8 of PCM signals is held in the latch circuit 33 until the whole data on one track is picked up. The comparator 34 compares the absolute value of each PCM signal with the value held in the latch circuit 33, and if a PCM signal in excess of the maximum value is detected, it is determined to be abnormal data, with the incorrectable flag being set by the OR gate 35, and the error conceal circuit 36 is activated for error concealment. The output of the error conceal circuit 36 is reconverted into 2-channel analog signals by the D/A converter 37 and sent out through the output terminals 38 and 39.

## Claims

1. A method of recording data on a magnetic tape using a rotary-head PCM-signal recorder by forming m PCM-signals to which are appended a synchronizing signal (1), control signals (5-10) representing control data related to said PCM-signals, and a parity signal (4) for error detection and correction to form one block of a record, with signals of n blocks being recorded on one track of said magnetic tape, wherein data maybe recorded a number of times on one track, **characterized by:**

    a) distributing the bits of control data in said control signals, which are common to at least one trick of n blocks by distributing said data in the blocks of each of a number of $n_2$ groups of $n_1$ blocks in said track by dividing said control data in $n_1$ groups of k bits and allocating each group of k bits of said control data to another one of the $n_1$ blocks of each group, the number of groups $n_2$ satisfying the relationship $n \geq n_1 \times n_2$, and

    b) thereby recording said distributed control data $n_2$-times on one track, once in each of the $n_2$ groups, where m, n, $n_1$ and $n_2$ and positive integers more than one, and k is a positive integer (fig. 4).

2. A data recording method according to claim 1, wherein said control data of $n_1 \times k$ bits comprises common signal information of $n_3 \times k$ bits and an error detection signal of $(n_1 - n_3) \times k$ bits used in composing said common signal information where $n_3$ is a positive integer. (Fig. 6)

3. A method of recording data on a magnetic tape using a rotary-head PCM-signal recorder by forming m PCM-signals to which are appended a synchronizing signal (1), control signals (5-10) representing control data related to said PCM signals, and a parity signal (4) for error detection and correction to form one block of a record, with signals of n blocks being recorded on one track of said magnetic tape, wherein data maybe recorded a number of times on one track, characterized by:

a) distributing the bits of control data in said control signals, (which are common to at least N tracks) by distributing said data in N tracks, wherein one bit for control data is allocated to each block of each of the N tracks; thereby

b) recording each bit of said control data n'-times (n' ≤ n) on one track, where m, n, N and n/n' are positive integers, where n, n', N > 1 and n/n' ≥ 1 (fig. 5).

4. A data recording method according to claim 3, wherein said control data of N bits comprises common control information of N' bits and error detection signal of (N - N') bits used in composing said common control information. (Fig. 6)

5. A data recording method according to claim 1 or 3, wherein high-order bits of a predetermined number excluding a sign bit of a signal representing a maximum absolute value among PCM signals of m x n in number recorded on one track or m x n x N in number recorded on N tracks are recorded in bits of said control data. (Figs. 6 and 8)

6. A method of recording and reproducing an audio signal on a magnetic tape using a rotary-head PCM data recorder according to claim 1, in which said audio signal is converted into digital signals, said digital signals are processed to form signals of data blocks of n in number and said data block signals are recorded and, thereafter, reproduced on each track of said magnetic tape, wherein said data block includes a synchronizing signal (1), PCM signals of m in number, control signals (5-10) related to said PCM signals and a parity signal (4) for error detection and correction, said control signals (5-10) including common control signals common to at least n data blocks recorded on one track and inherent control signals inherent to each block, said method comprising the steps of:

(a) generating a bit string for forming said common control signals;

(b) allocating bits of said bit string distributively in data blocks constituting each of multiple groups of data blocks forming altogether said n data blocks so that said bit string is distributed in data blocks of each group;

(c) recording each block containing said distributed data bits on said magnetic tape; and

(d) in reproducing said audio signal, composing bits distributed in groups of data blocks retrieved from said tape so as to reproduce said common control signals.

7. A rotary-head PCM tape recorder comprising:

(a) analog-to-digital (A/D) converting means (16) for converting an input analog signal into digital signals of word string;

(b) signal processing means (17) which distributes said digital signals so as to form a plurality of data blocks each including a predetermined number of words, and appending a parity signal (4) to each data block;

(c) control signal generating means (14) which provides control signals (5-10) including information necessary for the reproduction of said digital signals and also including information related to the first-mentioned information;

(d) timing generation means (15) for producing a track identification signal and a block address signal;

(e) synchronizing signal generating means (13) for producing a synchronizing signal (1) for discriminating said data blocks;

(f) multiplexer means (18) for selecting outputs of said synchronizing signal generating means, said control signal generating means, said timing generation means and said signal processing means sequentially so as to produce a string of PCM recording signal; and

(g) means (19, 25, 26) for recording the output of said multiplexer means (18) on said magnetic tape using said rotary head (25),

(h) said control signal generating means (14) comprising means (22) for

aa) distributing the bits of control data in said control signals, which are common to at least one track of n blocks by distributing said data in the blocks of each of a number of $n_2$ groups of $n_1$ blocks in said track by dividing said control data in $n_1$ groups of k bits and allocating each group of k bits of said control data to another one of the $n_1$ blocks of each group, the number of groups $n_2$ satisfying the relationship $n \geq n_1 \times n_2$, and

bb) thereby recording said distributed control data $n_2$-times on one track, once in each of the $n_2$ groups, where $m$, $n$, $n_1$ and $n_2$ and positive integers more than one, and $k$ is a positive integer (fig. 4).

8. A rotary-head PCM tape recorder comprising:

(a) analog-to-digital (A/D) converting means (16) for converting an input analog signal into digital signals of word string;

(b) signal processing means (17) which distributes said digital signals so as to form a plurality of data blocks each including a predetermined number of words, and appending a parity signal (4) to each data block;

(c) control signal generating means (14) which provides control signals (5-10) including information necessary for the reproduction of said digital signals and also including information related to the first-mentioned information;

(d) timing generation means (15) for producing a track identification signal and a block address signal;

(e) synchronizing signal generating means (13) for producing a synchronizing signal (1) for discriminating said data blocks;

(f) multiplexer means (18) for selecting outputs of said synchronizing signal generating means, said control signal generating means, said timing generation means and said signal processing means sequentially so as to produce a string of PCM recording signal; and

(g) means (19, 25, 26) for recording the output of said multiplexer means (18) on said magnetic tape using said rotary head (25);

(h) said control signal generating means (14) comprising means (22) for

aa) distributing the bits of control data in said control signals, (which are common to at least N tracks) by distributing said data in N tracks, wherein one bit for control data is allocated to each block of each of the N tracks; thereby

bb) recording each bit of said control data n'-times (n' $\leq$ n) on one track, where m, n, N and n/n' are positive integers n, n', N > 1 and n/n' $\geq$ 1 (fig. 5).

9. A recorder according to claim 8, wherein said predetermined number of block groups constitute a track of record, said control signal generaring means and said timing generation means operate in unison so that said common control signals are recorded on each track multiple number of times.

## Revendications

1. Procédé d'enregistrement de données sur une bande magnétique, utilisant un enregistreur de signaux MIC à tête rotative, moyennant la formation de $m$ signaux MIC, auxquels sont annexés un signal de synchronisation (1), des signaux de commande (5-10) représentant des données de commande associées auxdits signaux MIC, et un signal de parité (4) pour la détection et la correction d'erreurs de manière à former un bloc d'enregistrement, des signaux de $n$ blocs étant enregistrés sur une piste de ladite bande magnétique, et selon lequel des données peuvent être enregistrées un certain nombre de fois sur une piste, caractérisé par :

a) la répartition des bits des données de commande dans lesdits signaux de commande, qui sont communs au moins à une piste de $n$ blocs, au moyen de la répartition desdites données dans les blocs comportant chacun un nombre de $n_2$ groupes de $n_1$ blocs dans ladite piste, par sub-division desdites données de commande en $n_1$ groupes de $k$ bits et affectation de chaque groupe de $k$ bits desdites données de commande à un autre des $n_1$ blocs de chaque groupe, le nombre des groupes $n_2$ satisfaisant à la relation $n \geq n_1 \times n_2$, et

b) de ce fait, l'enregistrement desdites données de commande réparties, $n_2$ fois sur une piste, une fois dans chacun des $n_2$ groupes, $m$, $n$, $n_1$ et $n_2$ étant des entiers positifs supérieurs à un et $k$ un entier positif (figure 4).

2. Procédé d'enregistrement de données selon la revendication 1, selon lequel lesdites données de commande constituées de $n_1 \times k$ bits comprennent une information de signal commune formée de $n_3 \times k$ bits et un signal de détection d'erreur formé de $(n_1 - n_3) \times k$ bits et utilisé pour composer ladite information de signal commun, $n_3$ étant un entier positif. (figure 6).

3. Procédé d'enregistrement de données sur une bande magnétique, utilisant un enregistreur de signaux MIC à tête rotative, moyennant la formation de $m$ signaux MIC, auxquels sont annexés un signal de synchronisation (1), des signaux de commande (5-10) représentant des données de commande associées auxdits signaux MIC, et un signal de parité (4) pour la détection et la correction d'erreurs de manière à former un bloc d'enregistrement, des signaux de $n$ blocs étant enregistrés sur une piste de ladite bande magnétique, et selon lequel des données peuvent être enregistrées un certain nombre de fois sur une piste, caractérisé par :

a) la répartition des bits de données de commande dans lesdits signaux de commande, qui sont communs à au moins N pistes, par répartition desdites données dans N pistes, un bit pour les données de commande étant affecté à chaque bloc de chacune des N pistes; et, de ce fait

b) l'enregistrement de chaque bit desdites données de commande n' fois (n' ≤ n) sur une piste, m, n, N et n/n' étant des entiers positifs avec n, n', N > 1 et n/n' ≧ 1 (figure 5).

4. Procédé d'enregistrement de données selon la revendication 3, selon lequel lesdites données de commande formées de N bits comprennent une information de commande commune formée de N' bits et un signal de détection d'erreur formé de (N - N') bits, utilisé pour composer ladite information de commande commune. (Figure 6).

5. Procédé d'enregistrement de données selon la revendication 1 ou 3, selon lequel des bits de rang élevé présents en un nombre prédéterminé, à l'exclusion d'un bit de signe, d'un signal représentant une valeur absolue maximale parmi les signaux MIC présents en un nombre m x n et enregistrés sur une piste, ou en un nombre m x n x N et enregistrés sur N pistes sont enregistrés sous la forme de bits desdites données de commande. (Figures 6 et 8).

6. Procédé d'enregistrement pour enregistrer et lire un signal audio sur une bande magnétique en utilisant un enregistreur de données MIC à tête rotative selon la revendication 1, selon lequel ledit signal audio est converti en des signaux numériques, lesdits signaux numériques sont traités pour former des signaux de blocs de données présents en un nombre n et lesdits signaux de blocs de données sont enregistrés, puis lus sur chaque piste de ladite bande magnétique, et selon lequel ledit bloc de données comprend un signal de synchronisation (1), des signaux MIC présents en un nombre m, des signaux de commande (5-10) associés auxdits signaux MIC et un signal de parité (4) pour la détection et la correction d'erreurs, lesdits signaux de commande (5-10) comprenant des signaux de commande commun à au moins n blocs de données enregistrés sur une piste et des signaux de commande inhérents à chaque bloc, ledit procédé comprenant les étapes consistant à :

a) produire une suite de bits pour former lesdits signaux de commande communs;

b) affecter des bits de ladite suite de bits d'une manière répartie dans des blocs de données constituant chacun de multiples groupes de blocs de données formant ensemble lesdits n blocs de données de sorte que ladite suite de bits est répartie dans des blocs de données de chaque groupe;

c) enregistrer chaque bloc contenant lesdits bits de données répartis, sur ladite bande magnétique; et

d) lors de la lecture dudit signal audio, composer des bits répartis dans des groupes de blocs de données extraits de ladite bande pour reproduire lesdits signaux de commande communs.

7. Enregistreur à bande/MIC à tête rotative comprenant :

a) des moyens de conversion analogique/numérique (A/D) (16) pour convertir un signal d'entrée analogique en des signaux numériques d'une suite de mots;

b) des moyens de traitement de signaux (10), qui répartissent lesdits signaux numériques de manière à former une pluralité de blocs de données comprenant chacun un nombre prédéterminé de mots, et annexer un signal de parité (4) à chaque bloc de données;

c) des moyens (14) de production de signaux de commande, qui produisent des signaux de commande (5-10) comprenant une information nécessaire pour la lecture desdits signaux numériques et comprenant également une information associée à l'information mentionnée en premier;

d) des moyens de production de cadence (15) pour produire un signal d'identification de piste et un signal d'adresse de bloc; e) des moyens (13) de production d'un signal de synchronisation, pour produire un signal de synchronisation (1) pour discriminer lesdits blocs de données;

f) des moyens multiplexeurs (18) pour sélectionner de façon séquentielle des sorties desdits moyens de production du signal de synchronisation, desdits moyens de production de signaux de commande, desdits moyens de production de cadence et desdits moyens de traitement de signaux pour produire une suite de signaux d'enregistrement MIC;

g) des moyens (19,25,26) pour enregistrer le signal de sortie desdits moyens multiplexeurs (18) sur ladite bande magnétique en utilisant ladite tête rotative (25);

h) lesdits moyens (14) de production de signaux de commande comprenant des moyens (22) pour

aa) la répartition des bits des données de commande dans lesdits signaux de commande, qui sont communs au moins à une piste de n blocs, au moyen de la répartition desdites données dans les blocs comportant chacun un nombre de $n_2$ groupes de $n_1$ blocs dans ladite piste, par subdivision desdites données de commande en $n_1$ groupes de k bits et affectation de chaque groupe de k bits desdites données de commande à un autre des $n_1$ blocs de chaque groupe, le nombre des groupes $n_2$ satisfaisant à la relation $n \geq n_1 \times n_2$, et

bb) l'enregistrement, réalisé de ce fait, desdites données de commande distribuées $n_2$ fois sur une piste, une fois dans chacun des $n_2$ groupes, m, n, $n_1$ et $n_2$ étant des entiers positifs supérieurs à un et k un entier positif (figure 4).

8. Enregistreur à bande/MIC à tête rotative comprenant :

a) des moyens de conversion analogique/numérique (A/D) (16) pour convertir un signal d'entrée analogique en des signaux numériques d'une suite de mots;

b) des moyens de traitement de signaux (10), qui répartissent lesdits signaux numériques de manière à former une pluralité de blocs de données comprenant chacun un nombre prédéterminé de mots, et annexer un signal de parité (4) à chaque bloc de données;

c) des moyens (14) de production de signaux de commande, qui produisent les signaux de commande (5-10) comprenant une information nécessaire pour la lecture desdits signaux numériques et comprenant également une information associée à l'information mentionnée en premier;

d) des moyens de production de cadence (15) pour produire un signal d'identification de piste et un signal d'adresse de bloc;

e) des moyens (13) de production d'un signal de synchronisation, pour produire un signal de synchronisation (1) pour discriminer lesdits blocs de données;

f) des moyens multiplexeurs (18) pour sélectionner de façon séquentielle des sorties desdits moyens de production du signal de synchronisation, desdits moyens de production de signaux de commande, desdits moyens de production de cadence et desdits moyens de traitement de signaux pour produire une suite de signaux d'enregistrement MIC;

g) des moyens (19,25,26) pour enregistrer le signal de sortie desdits moyens multiplexeurs (18) sur ladite bande magnétique en utilisant ladite tête rotative (25);

h) lesdits moyens (14) de production de signaux de commande comprenant des moyens (22) pour

aa) la répartition des bits de données de commande dans lesdits signaux de commande, qui sont communs à au moins N pistes, par répartition desdites données dans N pistes, un bit pour les données de commande étant affecté à chaque bloc de chacune des N pistes; et, de ce fait

bb) l'enregistrement de chaque bit desdites données de commande n' fois (n' $\leq$ n) sur une piste, m, n, N et n/n' étant des entiers positifs avec n, n', N > 1 et n/n' $\geq$ 1. (Figure 5).

9. Enregistreur selon la revendication 8, dans lequel ledit nombre prédéterminé de groupes de blocs constitue une piste d'enregistrement, lesdits moyens de production de signaux de commande et lesdits moyens de production de cadence fonctionnent de concert de sorte que lesdits signaux de commande communs sont enregistrés plusieurs fois sur chaque piste.

**Patentansprüche**

1. Verfahren zum Aufzeichnen von Daten auf einem Magnetband unter Verwendung eines PCM-Signalaufzeichnungsgerätes mit Rotationskopf, in dem m PCM-Signale ausgebildet werden, denen ein Synchronisiersignal (1), Steuersignale (5-10), die die PCM-Signale betreffende Steuerdaten darstellen, und ein Paritätssignal (4) zur Fehlererfassung und -korrektur unter Ausbildung eines Aufzeichnungsblockes angehängt werden, wobei Signale von n Blöcken auf einer Spur des Magnetbandes aufgezeichnet werden und wobei Daten auf einer Spur mehrfach aufgezeichnet werden können,

**gekennzeichnet durch:**

a) Verteilen in die Steuersignale der Bits von Steuerdaten, die zumindest einer Spur von n Blöcken gemeinsam sind, indem die Daten in die Blöcke von jeder einer Anzahl von $n_2$ Gruppen aus $n_1$ Blöcken in der Spur verteilt werden durch Unterteilen der Steuerdaten in $n_1$ Gruppen aus k Bits und Zuweisen jeder Gruppe von k Bits der Steuerdaten einem anderen der $n_1$ Blöcke jeder Gruppe, wobei die Anzahl der Gruppen $n_2$ die Beziehung $n \geq n_1 \times n_2$ erfüllt, und
b) wodurch die verteilten Steuerdaten $n_2$-mal auf einer Spur aufgezeichnet werden, und zwar einmal in jeder der $n_2$ Gruppen, wobei m, n, $n_1$ und $n_2$ positive ganze Zahlen größer als 1 und k eine positive ganze Zahl ist (Fig. 4).

2. Datenaufzeichnungsverfahren nach Anspruch 1, wobei die Steuerdaten aus $n_1 \times k$ Bits gemeinsame Signalinformation aus $n_3 \times k$ Bits und ein Fehlererfassungssignal aus $(n_1 - n_3) \times k$ Bits umfassen, die beim Zusammenstellen der gemeinsamen Signalinformation verwendet werden, wobei $n_3$ eine positive ganze Zahl ist (Fig. 6).

3. Verfahren zum Aufzeichnen von Daten auf ein Magnetband unter Verwendung eines PCM-Signalaufzeichnungsgerätes mit Rotationskopf, in dem m PCM-Signale ausgebildet weden, denen ein Synchronisiersignal (1), Steuersignale (5-10), die die PCM-Signale betreffende Steuerdaten darstellen, und ein Paritätssignal (4) zur Fehlererfassung und -korrektur unter Ausbildung eines Blockes eines Records angehängt werden, wobei Signale aus n Blöcken auf einer Spur des Magnetbandes aufgezeichnet werden und wobei Daten mehrfach auf einer Spur aufgezeichnet werden können, gekennzeichnet durch:
a) Aufteilen in die Steuersignale der Bits von Steuerdaten, die zumindest N Spuren gemeinsam sind, und zwar durch Aufteilen der Daten in N Spuren, wobei ein Bit für Steuerdaten jedem Block jeder der N Spuren zugewiesen wird; wodurch
b) jedes Bit der Steuerdaten ein u'-mal (n' $\leq$ n) auf einer Spur aufgezeichnet wird, wobei m, n, N und n/n' positive ganze Zahlen und wobei m, n', N $\geq$ 1 und n/n' $\geq$ 1 (Fig. 5).

4. Datenaufzeichnungsverfahren nach Anspruch 3, wobei die Steuerdaten aus N Bits gemeinsame Steuerinformation aus N' Bits und ein Fehlererfassungssignal aus (N - N') Bits umfassen, die beim Zusammenstellen der gemeinsamen Steuerinformation verwendet werden (Fig. 6).

5. Datenaufzeichnungsverfahren nach Anspruch 1 oder 3, wobei Bits höherer Ordnung einer vorbestimmten Anzahl unter Ausschluß eines Vorzeichenbits eines Signals, darstellend einen maximalen absoluten Wert unter PCM-Signalen der Zahl m x n, aufgezeichnet auf einer Spur, oder der Zahl m x n x N, aufgezeichnet auf N Spuren, in Bits der Steuerdaten aufgezeichnet werden (Fig. 6 und 8).

6. Verfahren zum Aufzeichnen und Wiedergeben eines Audiosignals auf ein bzw. von einem Magnetband unter Verwendung eines PCM-Datenaufzeichnungsgerätesmit Rotationskopf nach Anspruch 1, in welchem das Audiosignal in digitale Signale gewandelt wird, die digitalen Signale verarbeitet werden unter Ausbildung von Signalen von Datenblöcken der Zahl n, und wobei die Datenblocksignale aufgezeichnet und hiernach wiedergegeben werden, und zwar auf jede bzw. von jeder Spur des Magnetbandes, wobei der Datenblock ein Synchronisiersignal (1), PCM-Signale der Zahl m, Steuersignale (5-10), die die PCM-Signale betreffen, und ein Paritätssignal (4) zur Fehlererfassung und -korrektur enthalten, wobei die Steuersignale (5-10) gemeinsame Steuersignale, die zumindest n Datenblöcken gemeinsam sind, die auf einer Spur aufgezeichnet sind, und inherente Steuersignale, die jedem Block inherent sind, enthalten, wobei das Verfahren die Schritte aufweist:
a) Aufzeichnen einer Bitfolge zum Ausbilden der gemeinsamen Steuersignale;
b) Zuweisen von Bits der Bitfolge auf aufteilende Weise zu Datenblök-ken, unter Bildung jeweils von vielfachen Gruppen von Datenblöcken, die insgesamt die n Datenblöcke bilden, so daß die Bitfolge in die Datenblöcke jeder Gruppe aufgeteilt wird;
c) Aufzeichnen jedes die aufgeteilte Datenbits enthaltenden Blockes auf dem Magnetband; und
d) Zusammensetzen von in Gruppen von Datenblöcken verteilten Bits, die bei der Wiedergabe des Audiosignals von dem Band wiedergewonnen werden, und zwar zum Wiedergeben der gemeinsamen Steuersignale.

7. PCM-Bandaufzeichnungsgerät mit Rotationskopf, das aufweist:
a) eine Analog-digital (A/D) Wandlereinrichtung (16) zum Wandeln eines analogen Eingangssignals in digitale Signale einer Wortfolge;
b) eine Signalverarbeitungseinrichtung (17), die die digitalen Signale verteilt, um eine Vielzahl von Datenblöcken zu bilden, von denen jeder eine vorbestimmte Anzahl von Worten enthält, und ein Paritätssignal (4) jedem Datenblock anhängt;

c) eine Steuersignal-Erzeugungseinrichtung (14), die Steuersignale (5-10) liefert, die fur die Wiedergabe der digitalen Signale notwendige Information und auch Information enthalten, die die zuerst genannte Information betrifft;

d) eine Zeitgeneratoreinrichtung (15) zum Erzeugen eines Spuridentifikationssignals und eines Blockadressignals;

e) eine Synchronisationssignal-Erzeugungseinrichtung (13) zum Erzeugen eines Synchronisationssignals (1) zum Unterscheiden der Datenblöcke;

f) eine Multiplexer-Einrichtung (18) zum Auswählen von Ausgängen der Synchronisiersignal-Erzeugungseinrichtung, der Steuersignal-Einrichtung, der Zeitgeneratoreinrichtung und der Signalverarbeitungseinrichtung, und zwar auf sequentielle Weise, um eine Folge eines PCM-Aufzeichnungssignals zu erzeugen; und

g) eine Einrichtung (19, 25, 26) zum Aufzeichnen des Ausgangs der Multiplexer-Einrichtung (18) auf dem Magnetband unter Verwendung des Rotationskopfes (25);

h) wobei die Steuersignal-Erzeugungseinrichtung (14) eine Einrichtung (22) aufweist zum

aa) Aufteilen in die Steuersignale der Bits von Steuerdaten, die zumindest einer Spur von n Blöcken gemeinsam sind, und zwar durch Aufteilen der Daten in die Blöcke von jeder einer Anzahl von $n_2$ Gruppen aus $n_1$ Blöcken in der Spur, wobei die Steuerdaten in $n_1$ Gruppen aus k Bits aufgeteilt werden und jeder Gruppe von k Bits der Steuerdaten einem anderen der $n_1$ Blöcke jeder Gruppe zugewiesen werden, wobei die Anzahl von Gruppen $n_2$ die Beziehung $n \geq n_1 \times n_2$ erfüllt, und

bb) wodurch die aufgeteilten Steuerdaten $n_2$-mal auf einer Spur aufgezeichnet werden, und zwar einmal in jeder der $n_2$ Gruppen, wobei m, n, $n_1$ und $n_2$ positive ganze Zahlen größer als 1 und k eine positive ganze Zahl ist (Fig. 4).

8. PCM-Bandaufzeichnungsgerät mit Rotationskopf, das aufweist:

a) eine Analog-digital (A/D) Wandlereinrichtung (16) zum Wandeln eines analogen Eingangssignals in digitale Signale einer Wortfolge;

b) eine Signalverarbeitungseinrichtung (17), die die digitalen Signale verteilt, um eine Vielzahl von Datenblöcken zu bilden, von denen jeder eine vorbestimmte Anzahl von Worten enthält, und ein Paritätssignal (4) jedem Datenblock anhängt;

c) eine Steuersignal-Erzeugungseinrichtung (14), die Steuersignale (5-10) liefert, die für die Wiedergabe der digitalen Signale notwendige Information und auch Information enthalten, die die zuerst genannte Information betrifft;

d) eine Zeitgeneratoreinrichtung (15) zum Erzeugen eines Spuridentifikationssignals und eines Blockadressignals;

e) eine Synchronisationssignal-Erzeugungseinrichtung (13) zum Erzeugen eines Synchronisationssignals (1) zum Unterscheiden der Datenblöcke;

f) eine Multiplexer-Einrichtung (18) zum Auswählen von Ausgängen der Synchronisiersignal-Erzeugungseinrichtung, der Steuersignal-Einrichtung, der Zeitgeneratoreinrichtung und der Signalverarbeitungseinrichtung, und zwar auf sequentielle Weise, um eine Folge eines PCM-Aufzeichnungssignals zu erzeugen; und

g) eine Einrichtung (19, 25, 26) zum Aufzeichnen des Ausgangs der Multiplexer-Einrichtung (18) auf dem Magnetband unter Verwendung des Rotationskopfes (25);

h) wobei die Steuersignal-Erzeugungseinrichtung (14) eine Einrichtung (22) aufweist zum

aa) Aufteilen in die Steuersignale der Bits von Steuerdaten, die zumindest N Spuren gemeinsam sind, und zwar durch Aufteilen der Daten N Spuren, wobei ein Bit für Steuerdaten jedem Block jeder der N Spuren zugewiesen wird, wodurch bb) jedes Bit der Steuerdaten n'-mal (n' $\leq$ n) auf einer Spur aufgezeichnet wird, wobei m, n, N und n/n' positive ganze Zahlen sind und n, n', N > 1 und n/n' $\geq$ 1 (Fig. 5).

9. Aufzeichnungsgerät nach Anspruch 8, wobei die vorbestimmte Anzahl von Blockgruppen eine Aufzeichnungsspur bildet, und wobei die Steuersignal-Erzeugungseinrichtung und die Zeitgeneratoreinrichtung unisono arbeiten, so daß die gemeinsamen Steuersignale auf jeder Spur mehrfach aufgezeichnet werden.

# FIG. 1
# PRIOR ART

PCM RECORD FORMAT

| SYNC | CONTROL | m- PCM SIG.<br>(e.g. 12 SYMBOLS = 12×8 BITS) | PARITY |
|------|---------|---|--------|
| 1 | 2 | 3 | 4 |

# FIG. 2

CONTROL SIG. FORMAT

1 BIT

| SEARCH | PCM<br>DATA ID | TRACK<br>ID<br>4 BITS | BLOCK<br>ADDRESS<br>8 BITS |
|--------|----------------|----------------------|----------------------------|
| 5 | 6 | 7 | 8 |

# FIG. 3

CONTROL SIGNAL FORMAT

| 1 | 1 | 1 | 1 | 4 BITS | 8 BITS | 8 BITS |
|---|---|---|---|--------|--------|--------|
| SEARCH | CONTROL | SUB | SUB | TRACK<br>ID | BLOCK<br>ADR. | PARITY |
| 5 | 6 | 9 | 10 | 7 | 8 | 4a |

# FIG. 4

DATA ON ONE TRACK

EP 0 149 245 B1

# FIG. 5

32 TRACK

0 ------- 31

32 BLOCKS

6

# FIG. 6

BLOCK
NO.

| | | |
|---|---|---|
| 0 | 4 (BITS) | 6 — 1 SAMLING FREQ |
| 3 | | |
| 4 | 4 | 6 — 2 QUANTIZING BIT |
| 7 | | |
| 8 | 1 | 6 — 3 LINEAR/NON-LINEAR INDICATION |
| 9 | 1 | 6 — 4 EMPHASIS |
| 10 | | |
| 11 | 1 | 6 — 5 DUBBING |
| 12 | | 6 — 6 MUTE |
| 15 | 4 | 6 — 7 SIGNAL TYPE |
| 16 | | |
| | 8 | 6 — 8 HIGH — ORDER 8-BITS MAX PCM DATA/TRACK |
| 23 | | |
| 24 | | |
| | 8 | 6 — 9 ERROR DETECTION PARITY |
| 31 | | |

N′

N-N′

# FIG. 7

FIG. 8

TO GEN. 22
104

CONTROL SIG.
SETTING — 110

MAX.
DETECT — 109

105

106 — MEMORY

PARITY GEN.

108

TO SWITCHING
CIRCUIT 18

102

101
FROM
A/D CONV. 16

107 — ADDRESS
CONTROL

103
FROM
TIMING GEN. 15

FIG. 9

CONTROL
DATA FORMAT    EVEN BLOCK

ID          A

1          7-BIT

| 0 | BLOCK ADDRESS |

8

ODD BLOCK

ID          B

1  1  1  1      4-BIT

| 1 | | | | TRACK ID |

5  6  9      7

EP 0 149 245 B1

# FIG. 10

ROTARY HEAD PCM RECORDER

18

FIG. 11

PCM AUDIO PLAYER

STEREO AUDIO OUT

38 39

37 D/A

36 ERROR CONCEAL

35

34 COMP.

33 MAX PCM LATCH

PCM 40

INCORRECTABLE FLAG 41

31 SIGNAL PROCESSOR

32 CONTROL SIG. PROCESSOR (ERROR DET.)

30 PLAYBACK CIRCUIT

CONTROL SIG. 2

25

26